# EUROPEAN PATENT SPECIFICATION

(11) **EP 4 596 194 B1**
(45) Date of publication and mention of the grant of the patent: **29.04.2026**
(21) Application number: 25155141.2
(22) Date of filing: 31.01.2025
(51) Int. Cl.: B26D 1/16, B26D 1/18, B26D 7/06, B26D 11/00, H01M 10/54

(54) **BATTERY CUTTING APPARATUS AND METHOD**
BATTERIESCHNEIDEVORRICHTUNG UND -VERFAHREN
APPAREIL ET PROCÉDÉ DE DÉCOUPE DE BATTERIE

(30) Priority: 04.02.2024 CN 202410160548
(43) Date of publication of application: 06.08.2025
(73) Proprietor: Hithium Tech HK Limited, Hong Kong (HK)
(72) Inventor: CHEN, Xuanfeng, Fujian, 361100 (CN); CHEN, Jiazhu, Fujian, 361100 (CN); ZHOU, Long, Fujian, 361100 (CN); FAN, Yunlong, Fujian, 361100 (CN)
(74) Representative: RGTH

(56) References cited:
- CN-U- 210 778 886
- CN-U- 218 788 409

## Description

### TECHNICAL FIELD

The present application relates to the technical field of battery recycling device, and in particular, to a battery cutting apparatus and method.

### BACKGROUND

With the rapid development of the new energy industry, a large number of scrapped batteries will be generated after the production and use of secondary batteries, and the scrapped batteries need to be recycled. At present, the scrapping mainly occurs in three stages of the production and use of secondary batteries. The first stage is during the production of secondary batteries, for example, before the injection process and after the top cover and the housing are fully welded, where poor processing quality occurs and leads to scrap. The second stage is during the production of secondary batteries, for example, after the injection process, where poor welding quality of the sealing pins occurs and leads to scrap. The third stage refers to generating the waste batteries after the use of secondary batteries.

### SUMMARY

The present application discloses a battery cutting apparatus and method.

In a first aspect, the present application discloses a battery cutting apparatus. The battery cutting apparatus comprises: a carrying assembly, a first cutter assembly, a first driving assembly, a second cutter assembly; and a second driving assembly. The carrying assembly is configured to carry a battery to be cut. The first driving assembly is in transmission connection with at least one of the first cutter assembly and the carrying assembly, and is configured to make the first cutter assembly and the carrying assembly move relative to each other along a first direction, to cut off two edges of a housing of the battery extending along the first direction. The second driving assembly is in transmission connection with at least one of the second cutter assembly and the carrying assembly, and is configured to make the second cutter assembly and the carrying assembly move relative to each other along a second direction, to cut off two edges of the housing of the battery extending along the second direction. The second direction is perpendicular to the first direction. At least one of the first cutter assembly and the second cutter assembly is a pressing and cutting cutter assembly, and the pressing and cutting cutter assembly is configured to be able to press and break the housing of the battery.

In a second aspect, the present application further discloses a battery cutting method, which is applied to any one of the battery cutting apparatuses described in the first aspect. The battery cutting method comprises: placing the battery to be cut on the carrying assembly; and the battery cutting method further comprises at least one of: pressing and cutting the two edges of the housing of the battery extending along the first direction via the first cutter assembly, and pressing and cutting the two edges of the housing of the battery extending along the second direction via the second cutter assembly.

In a third aspect, the present application further discloses a battery disassembly device, which comprises a battery cutting apparatus described in the first aspect.

### BRIEF DESCRIPTION OF THE DRAWINGS

In order to more clearly illustrate the technical solutions in the embodiments of the present application, the drawings required for use in the embodiments will be briefly introduced below. Obviously, the drawings described below are only some embodiments of the present application. For those of ordinary skill in the art, other drawings can also be obtained according to these drawings without paying creative effort.
FIG. 1 is a perspective view of a battery cutting apparatus provided in an embodiment of the present application;
FIG. 2 is an enlarged view of position A in FIG. 1;
FIG. 3 is a perspective view of a first pressing and cutting tool provided in an embodiment of the present application;
FIG. 4 is a perspective view of a combination of a second driving assembly, a second cutter assembly, and a second guide assembly provided by an embodiment of the present application;
FIG. 5 is a perspective view of a combination of a first driving assembly, a first cutter assembly, a carrying assembly, a first limiting assembly, and a first guide assembly provided in an embodiment of the present application;
FIG. 6 is a perspective view of a combination of the first driving assembly, the first cutter assembly, the second driving assembly, the second cutter assembly, the carrying assembly, the first guide assembly, the first limiting assembly, and a second limiting assembly provided in an embodiment of the present application;
FIG. 7 is a perspective view of the carrying assembly provided in an embodiment of the present application;
FIG. 8 is a flow chart of a first kind of cutting process of a housing of the battery provided in an embodiment of the present application;
FIG. 9 is a flow chart of a process of cutting the housing of the battery via first pressing and cutting tools provided in an embodiment of the present application;
FIG. 10 is a flow chart of a second kind of cutting process of the housing of the battery provided in an embodiment of the present application;
FIG. 11 is a flow chart of a process of transporting the housing of the battery after cutting provided in an embodiment of the present application.

Description of reference numerals:
1-Carrying assembly; 11-Fixing seat; 111-Accommodating groove; 112-Opening; 12-Clamping module; 13-Elastic guide sheet; 2-First cutter assembly; 21-First pressing and cutting tool; 211-First tool holder; 212-First tool body; 3a-First driving assembly; 3b-Second driving assembly; 4-Second cutter assembly; 41-Second pressing and cutting tool; 411-Second tool holder; 412-Second tool body; 5a-First guide rail assembly; 51-First guide rail; 52-First sliding member; 5b-Second guide rail assembly; 53-Second guide rail; 54-Second sliding member; 6-First limiting assembly; 61-Fixing member; 62-First abutment member; 621-Elastic abutment portion; 7-Second limiting assembly; 8-Transport assembly; 81-Driving module; 82-Picking module; 821-First picking member; 822-Second picking member; 9-Conveying assembly; 10-Battery cutting apparatus; 20-Battery.

### DETAILED DESCRIPTION

The technical solutions in the embodiments of the present application will be described clearly and completely in the following with reference to the accompanying drawings in the embodiments of the present application. Obviously, the described embodiments are only a part of the embodiments of the present application and not all of the embodiments. Based on the embodiments in the present application, all other embodiments obtained by a person of ordinary skill in the art without making creative effort fall within the scope of protection of the present application.

In the present application, the terms "installed", "set", "provided ", "connected", and "in connection with" may be understood in a broad sense. For example, it may refer to a fixed connection, a detachable connection, or an integral structure. It may refer to a mechanical connection, or an electrical connection. It may refer to a direct connection, or an indirect connection via an intermediate medium. Alternatively, it may refer to an internal communication between two apparatuses, elements, or components. For those of ordinary skills in the art, the specific meanings of the above terms in the present application may be understood according to specific circumstances.

In addition, the terms "first", "second", etc. are used primarily to distinguish different apparatuses, elements or components (the specific types and structures thereof may be the same or different), and are not intended to indicate or imply the relative importance and the quantity of the indicated apparatuses, elements or components. Unless otherwise specified, "plurality of" means two or more.

A secondary battery mainly comprises a housing, a top cover and a cell contained in the housing. The top cover is arranged on an opening of the housing in a sealed manner. In the process of disassembling the scrapped secondary battery, the position where the housing and the top cover of the secondary battery are connected is first cut so that the cell can be taken out of the housing, thereby facilitating the disassembly and recycling of the cell, the top cover and the housing, respectively.

In general, the existing cell shelling and recycling apparatuses grind and cut the connection between the top cover and the housing through a driving assembly being in transmission connection with a disc cutter to drive the disc cutter to rotate, so as to achieve the purpose of removing the cell from the housing. However, when cutting the housing in the above manner, the disc cutter will grind the housing and it is likely to produce plenty of fine chips, which will not only pollute the surrounding environment, but also easily cause the fine chips to adhere to the cell, which is not conducive to the subsequent disassembly of the cell.

In Chinese patent CN218788409U, a cell shelling and recycling apparatus is disclosed, where a fourth driving member is in transmission connection with a disc cutter to drive the disc cutter to move. The fourth driving member is driven to move in a first direction via a first driving member, the fourth driving member is driven to move in a second direction via a second driving member, and the fourth driving member is driven to move in a third direction via a third driving member. In this way, when the disc cutter moves along the first direction, the second direction or the third direction, it moves on its own under the drive of the fourth driving member at the same time to cut the position where the top cover and the housing are connected, to achieve the purpose of taking the cell out of the housing. However, in the process of cutting the housing in the above manner, the material of the housing is usually aluminum or aluminum alloy, which has a certain hardness. In the process of cutting the housing, the disc cutter will grind and cut the housing and it is likely to produce plenty of fine chips, which will not only pollute the surrounding environment, but also easily cause fine chips to adhere to the cell, resulting in the need to clean the adhered fine chips when the cell is disassembled later, which is not conducive to the subsequent disassembly of the cell.

Based on this, the present application discloses a battery cutting apparatus and method, which are less likely to produce fine chips during the process of cutting the housing of the battery, thereby effectively reducing the pollution to the surrounding environment. At the same time, it can also prevent the cell in the housing from being easily adhered with fine chips during the process of cutting the housing of the battery.

The technical solutions of the present application will be further described below in combination with specific embodiments and drawings.

### First embodiment

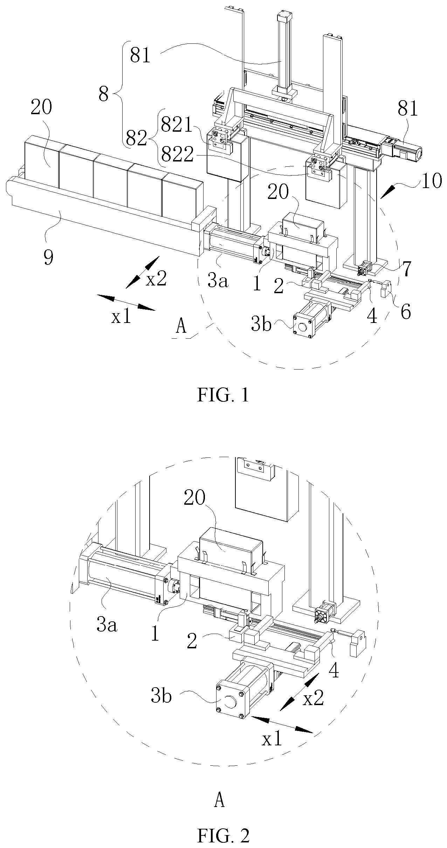

The present embodiment provides a battery cutting apparatus. As shown in FIG. 1 and FIG. 2, the battery cutting apparatus comprises a base (not shown in the figure), a carrying assembly 1, a first cutter assembly 2, a first driving assembly 3a, a second cutter assembly 4 and a second driving assembly 3b. The carrying assembly 1 is provided on the base and is used to carry the battery 20 to be cut. The first driving assembly 3a is in transmission connection with the first cutter assembly 2, the carrying assembly 1, or the first cutter assembly 2 and the carrying assembly 1, and is used to make the first cutter assembly 2 and the carrying assembly 1 move relative to each other along a first direction (the direction shown by x1 in FIG. 1), to cut off two edges of a housing of the battery 20 extending along the first direction. The second driving assembly 3b is in transmission connection with the second cutter assembly 4, the carrying assembly 1, or the second cutter assembly 4 and the carrying assembly 1, and is used to make the second cutter assembly 4 and the carrying assembly 1 move relative to each other along a second direction (the direction shown by x2 in FIG. 1) to cut off two edges of the housing of the battery 20 extending along the second direction. The second direction is perpendicular to the first direction. The first cutter assembly 2, the second cutter assembly 4, or the first cutter assembly 2 and the second cutter assembly 4, is a pressing and cutting cutter assembly, and the pressing and cutting cutter assembly is configured to be able to press and break the housing of the battery 20.

It needs to be explained that the above-mentioned pressing and cutting cutter assembly being configured to be able to press and break the housing of the battery 20 means that when the first cutter assembly 2 and the carrying assembly 1 move relative to each other along the first direction, the first cutter assembly 2 can squeeze the housing of the battery 20 carried on the carrying assembly 1 along the second direction, so that the housing of the battery 20 is deformed and broken, and the fracture opening of the housing of the battery 20 extends along the first direction; when the second cutter assembly 4 and the carrying assembly 1 move relative to each other along the second direction, the second cutter assembly 4 can squeeze the housing of the battery 20 carried on the carrying assembly 1 along the first direction, so that the housing of the battery 20 is deformed and broken, and the fracture opening of the housing of the battery 20 extends along the second direction.

The above battery 20 to be cut may be carried on the carrying assembly 1, and the first driving assembly 3a is used to make the first cutter assembly 2 and the carrying assembly 1 move relative to each other in the first direction to cut off the two edges of the housing of the battery 20 extending in the first direction, and the second driving assembly 3b is used to make the second cutter assembly 4 and the carrying assembly 1 move relative to each other in the second direction to cut off the two edges of the housing of the battery 20 extending in the second direction. In this way, the housing and the top cover of the battery 20 can be separated. Moreover, the first cutter assembly 2, the second cutter assembly 4, or the first cutter assembly 2 and the second cutter assembly 4 is a pressing and cutting cutter assembly, which can cause the two edges extending along the first direction, the two edges extending along the second direction, or the two edges extending along the first direction and the two edges extending along the second direction of the housing of the battery 20 to be subjected to a squeeze cut to produce fractures. Compared with the manner of grinding and cutting the housing of the battery 20 by driving the disc cutter to rotate through the driving member, it is less likely to produce fine chips during the cutting process of the housing. On the first hand, it can effectively reduce the pollution to the surrounding environment, which is beneficial to environmental protection. On the second hand, it can greatly reduce the loss of the housing during the cutting process, so that the housing of the cell has a relatively high recovery rate. On the third hand, it can also make it difficult for the cell located in the housing to adhere with fine chips due to the cutting of the housing, so that when the cell is disassembled later, there is no need to consider the cleaning of the fine chips on the surface of the cell, which effectively improves the disassembly efficiency of the cell of the battery 20.

It may be noted that the above-mentioned cutting off the two edges of the housing of the battery 20 extending along the first direction means that the first cutter assembly 2 cuts off the two edges extending along the first direction at the position where the housing and the top cover of the battery 20 are connected. The above-mentioned cutting off the two edges of the housing of the battery 20 extending along the second direction means that the second cutter assembly 4 cuts off the two edges extending along the second direction at the position where the housing and the top cover of the battery 20 are connected. The two edges extending in the first direction and the two edges extending in the second direction that are cut off are located in the same plane, and the four edges are connected end to end in sequence.

For the first driving assembly 3a being in transmission connection with the first cutter assembly 2, the carrying assembly 1, or the first cutter assembly 2 and the carrying assembly 1 to make the first cutter assembly 2 and the carrying assembly 1 move relative to each other along the first direction, it may mean that the first driving assembly 3a is in transmission connection with the first cutter assembly 2 to drive the first cutter assembly 2 to move along the first direction, so that the first cutter assembly 2 and the carrying assembly 1 move relative to each other along the first direction. It may also mean that the first driving assembly 3a is in transmission connection with the carrying assembly 1 to drive the carrying assembly 1 to move along the first direction, so that the first cutter assembly 2 and the carrying assembly 1 move relative to each other along the first direction. It may also mean that the first driving assembly 3a is in transmission connection with the first cutter assembly 2 and the carrying assembly 1, respectively, for respectively driving the first cutter assembly 2 and the carrying assembly 1 to move toward or away from each other along the first direction, so that the first cutter assembly 2 and the carrying assembly 1 move relative to each other along the first direction, which is not limited herein and may be selected according to actual conditions.

For the second driving assembly 3b being in transmission connection with the second cutter assembly 4, the carrying assembly 1, or the second cutter assembly 4 and the carrying assembly 1 to make the second cutter assembly 4 and the carrying assembly 1 move relative to each other along the second direction, it may mean that the second driving assembly 3b is in transmission connection with the second cutter assembly 4 to drive the second cutter assembly 4 to move along the second direction so that the second cutter assembly 4 and the carrying assembly 1 move relative to each other along the second direction. It may also mean that the second driving assembly 3b is in transmission connection with the carrying assembly 1 to drive the carrying assembly 1 to move along the second direction so that the second cutter assembly 4 and the carrying assembly 1 move relative to each other along the second direction. It may also mean that the second driving assembly 3b is in transmission connection with the second cutter assembly 4 and the carrying assembly 1, respectively, for respectively driving the second cutter assembly 4 and the carrying assembly 1 to move toward or away from each other along the second direction so that the second cutter assembly 4 and the carrying assembly 1 move relative to each other along the second direction. The present disclosure is not limited thereto, and the selection may be made according to actual conditions.

For the first cutter assembly 2, the second cutter assembly 4, or the first cutter assembly 2 and the second cutter assembly 4 being a pressing and cutting cutter assembly, it may mean that the first cutter assembly 2 is a pressing and cutting cutter assembly. It may also mean that the second cutter assembly 4 is a pressing and cutting cutter assembly. It may also mean that both the first cutter assembly 2 and the second cutter assembly 4 are pressing and cutting tool assemblies.

Optionally, as shown in FIG. 1 and FIG. 2, the first driving assembly 3a is in transmission connection with the carrying assembly 1, and is used to drive the carrying assembly 1 to move between the first working position and the second working position along the first direction. The first cutter assembly 2 is located on a moving path where the carrying assembly 1 moves from the first working position to the second working position, to cut off the two edges of the housing of the battery 20 extending along the first direction during the movement of the carrying assembly 1. The second cutter assembly 4 is provided in correspondence with the second working position along the second direction, and the second driving assembly 3b is in transmission connection with the second cutter assembly 4 to drive the second cutter assembly 4 to move along the second direction, to cut off the two edges of the housing of the battery 20 extending along the second direction.

In this way, the two edges of the housing of the battery 20 extending in the first direction can be cut off by the first cutter assembly 2 during the process of moving the carrying assembly 1 from the first working position to the second working position, and the two edges of the housing extending in the second direction can be cut off by moving the second cutter assembly 4 at the second working position. Compared with the manner of cutting the housing achieved by carrying the battery 20 onto the carrying assembly 1 and moving the carrying assembly 1 to a certain position, keeping it fixed, and moving the first cutter assembly 2 along the first direction and the second cutter assembly 4 along the second direction, in the present disclosure, after the battery 20 is loaded onto the carrying assembly 1, during the process of moving toward the direction adjacent to the next working position (such as a housing recycling working position or a battery cell disassembly working position, etc.), the two edges of the housing extending along the first direction can be cut off by the first cutter assembly 2, thereby effectively saving the cutting time of the battery 20 and improving efficiency.

Meanwhile, when the carrying assembly 1 moves to the second working position and the two edges of the housing extending along the second direction are being cut by the second cutter assembly 4, the next battery 20 to be cut may be loaded onto another carrying assembly 1 located on the first working position, or another carrying assembly 1 carrying the next battery 20 to be cut may be moved from the first working position to the second working position, thereby further improving the cutting efficiency of the housing of the battery 20.

For the first driving assembly 3a being in transmission connection with the carrying assembly 1, it may mean that the driving end of the first driving assembly 3a is directly connected to the carrying assembly 1, or that the driving end of the first driving assembly 3a is connected to the carrying assembly 1 through a connecting member, which is not limited herein. Similarly, the manner of the second driving assembly 3b being in transmission connection with the second cutter assembly 4 may substantially be the same as the manner of the first driving assembly 3a being in transmission connection with the carrying assembly 1, which will not be repeated herein.

In addition, the first driving assembly 3a may comprise any one of a pneumatic cylinder, an electric cylinder or a combination of a motor and a screw nut, which is not limited herein. The second driving assembly 3b may be implemented in substantially the same manner as the first driving assembly 3a, which will not be repeated here.

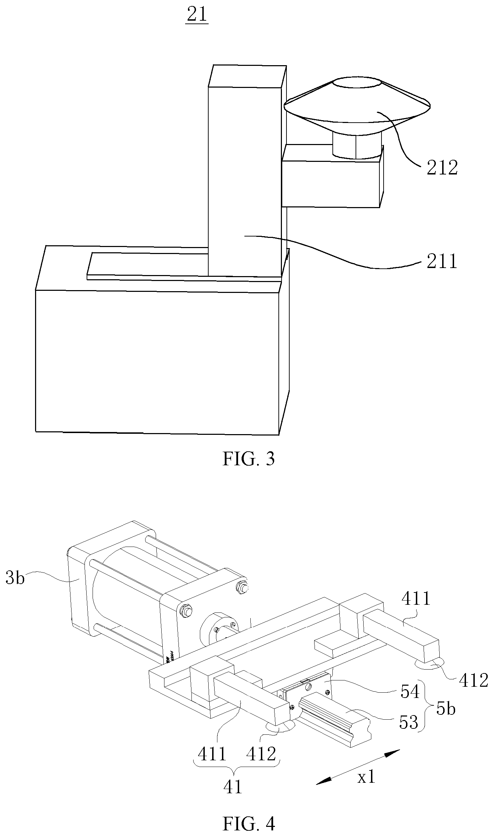

Optionally, as shown in FIG. 2 and FIG. 3, the first cutter assembly 2 comprises two first pressing and cutting tools 21, and the two first pressing and cutting tools 21 are provided opposite to each other along the second direction and on two opposite sides of the moving path of the carrying assembly 1 respectively. A first preset spacing is defined between the two first pressing and cutting tools 21 along the second direction, and the first preset spacing is configured such that when the carrying assembly 1 moves along the first direction, the two first pressing and cutting tools 21 are able to press and break the two edges of the housing of the battery 20 extending along the first direction.

In this way, during the movement of the carrying assembly 1 from the first working position to the second working position, the two first pressing and cutting tools 21 can press and cut off the two edges of the housing of the battery 20 extending along the first direction, so that it is less likely to produce fine chips when cutting the two edges of the housing of the battery 20 extending along the first direction. Furthermore, compared with moving the two pressing and cutting tools for cutting after moving the carrying assembly 1 to a certain position, the cutting efficiency can be effectively improved.

It needs to be explained that the above-mentioned two first pressing and cutting tools 21 being able to press and break the two edges of the housing of the battery 20 extending along the first direction means that the two first pressing and cutting tools 21 are able to form an extrusion force on the two edges of the housing of the battery 20 extending along the first direction during the movement of the carrying assembly 1 along the first direction, so that the two edges of the housing of the battery 20 extending along the first direction are deformed and a fracture opening extending along the first direction is formed.

The size of the first preset spacing is smaller than the size of the housing of the battery 20 along the second direction, and may be greater than the size of the cell of the battery 20 along the second direction, so as to prevent the two edges of the housing of the battery 20 extending along the first direction from damaging the cell in the housing during the process of being pressed and broken, thereby improving the quality of the disassembly of the battery 20.

Moreover, the first preset spacing between the two first pressing and cutting tools 21 along the second direction may be adjusted according to the different sizes of the housing of the battery 20 along the second direction, so that the first cutter assembly 2 can cut a plurality of housings of the batteries 20 of different sizes along the second direction, thereby improving the practicality of the battery cutting apparatus 10.

The first preset spacing between the two first pressing and cutting tools 21 along the second direction is adjustable, which may be implemented in various ways. For example, the first cutter assembly 2 may further comprise two first tool seats, the two first pressing and cutting tools 21 may be respectively provided on the two first tool seats, and the first tool seats are provided with multiple through holes extending along the second direction or long groove holes extending along the second direction. The position of the first pressing and cutting tool 21 along the second direction may be adjusted by bolts being threaded through different through holes or located at different positions of the long groove hole. Alternatively, the first cutter assembly 2 may further comprise two first tool adjustment driving members, the two first tool adjustment driving members are respectively connected to the two first pressing and cutting tools 21, and the first tool adjustment driving members are used to drive the first pressing and cutting tools 21 to move along the second direction to adjust the positions of the first pressing and cutting tools 21 along the second direction. The present disclosure is not limited thereto.

Optionally, as shown in FIG. 3, the first pressing and cutting tool 21 comprises a first tool holder 211 and a first tool body 212, and the first tool body 212 is provided on the first tool holder 211 and is rotatable via a first rotating shaft, and an extending direction of the first rotating shaft is perpendicular to both the first direction and the second direction.

In this way, when two first tool bodies 212 are pressing and cutting the two edges of the housing of the battery 20 extending along the first direction, the housing of the battery 20 may drive the two first tool bodies 212 to rotate in a direction opposite to the moving direction of the carrying assembly 1, so that the entire blade of the first tool body 212 can press and cut the housing of the battery 20, and the housing of the battery 20 is prevented from being pressed and cut by using the blade at a certain fixed position of the first tool body 212, which leads to a rapid wear, thereby avoiding the need for frequent maintenance and replacement due to the rapid wear of the blade at the certain fixed position of the first tool body 212, and effectively reducing costs.

The first tool body 212 may be a wheel cutter, a slitting cutter, etc., and may also be other cutters capable of pressing and cutting, which is not limited herein. In addition, the shape of the first tool body may be circular, square, oval, etc., which is not limited here, either.

In some embodiments, as shown in FIG. 2 and FIG. 4, the second cutter assembly 4 comprises two second pressing and cutting tools 41 provided opposite to each other along the first direction, and the two second pressing and cutting tools 41 are provided in correspondence with the second working position along the second direction. There is a second preset spacing between the two second pressing and cutting tools 41 along the first direction, and the second preset spacing is configured such that when the two second pressing and cutting tools 41 move along the second direction, the two second pressing and cutting tools 41 are able to press and break the two edges of the housing of the battery 20 extending along the second direction.

In this way, the two edges of the housing of the battery 20 extending along the second direction can be pressed and cut off by moving the two second pressing and cutting tools 41 along the second direction, so that it is not easy to produce fine chips when cutting the two edges of the housing of the battery 20 extending along the second direction, and the housing of the battery 20 is less likely to generate fine chips during the cutting process, thereby further reducing the loss of the housing of the battery 20.

The size of the second preset spacing is smaller than the size of the housing of the battery 20 along the first direction, and may be greater than the size of the cell of the battery 20 along the first direction, so as to prevent the two edges of the housing of the battery 20 extending along the second direction from damaging the cell in the housing during the process of being cut off, thereby improving the quality of the disassembly of the battery 20.

Moreover, the second preset spacing between the two second cutting tools 41 along the first direction may be adjusted according to the different sizes of the housings of the batteries 20 along the first direction, so that the second cutter assembly 4 is able to cut a plurality of housings of the batteries 20 of different sizes along the first direction, thereby improving the practicality of the battery cutting apparatus 10.

The implementation manner of the adjustable second preset spacing between the two second pressing and cutting tools 41 along the first direction may be roughly the same as the implementation manner of the adjustable first preset spacing between the two first pressing and cutting tools 21 along the second direction, and details may be referred to foregoing, which will not be repeated herein.

Optionally, as shown in FIG. 4, the second pressing and cutting tool 41 comprises a second tool holder 411 and a second tool body 412, and the second tool body 412 is provided on the second tool holder 411 and is rotatable via a second rotating shaft, and an extending direction of the second rotating shaft is perpendicular to both the first direction and the second direction.

In this way, when two second tool bodies 412 are pressing and cutting the two edges of the housing of the battery 20 extending along the second direction, the housing of the battery 20 may drive the two second tool bodies 412 to rotate in a direction opposite to the moving direction of the second tool bodies 412, so that the entire blade of the second tool body 412 can press and cut the housing of the battery 20, and the housing of the battery 20 is prevented from being pressed and cut by using the blade at a certain fixed position of the second tool body 412, which leads to a rapid wear, thereby avoiding the need for frequent maintenance and replacement due to the rapid wear of the blade at the certain fixed position of the second tool body 412, and effectively reducing costs.

The shape of the second tool body 412 may be substantially the same as the shape of the first tool body 212, and details may be referred to foregoing, which will not be repeated herein.

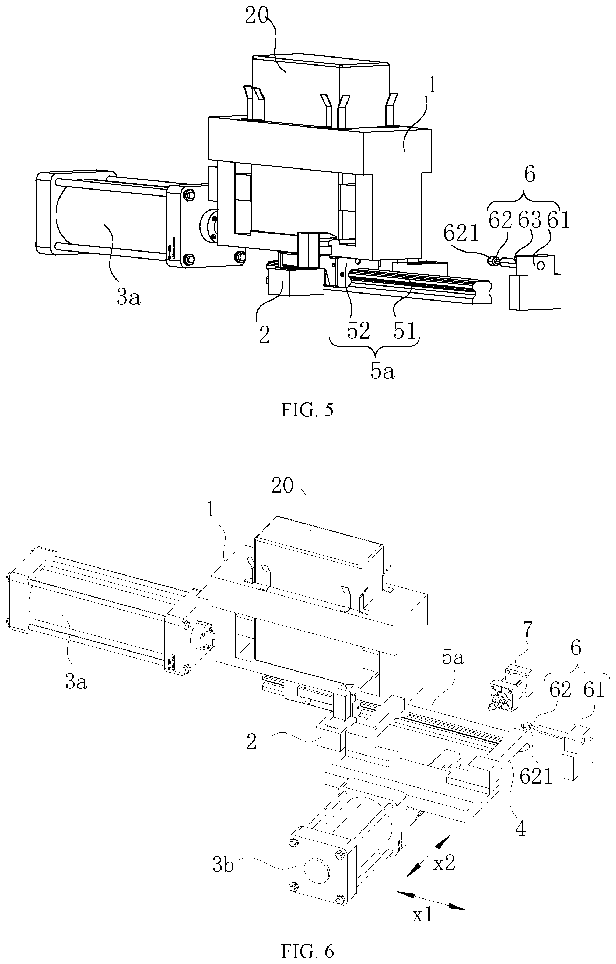

In some embodiments, as shown in FIG. 2 and FIG. 5, the battery cutting apparatus 10 further comprises a first guide rail assembly 5a. The first guide rail assembly 5a comprises a first guide rail 51 and a first sliding member 52. The first guide rail 51 is provided on the base and extends from the first working position to the second working position along the first direction. The first sliding member 52 is slidably provided on the first guide rail 51, and the carrying assembly 1 is provided on the first sliding member 52.

In this way, when the first driving assembly 3a drives the carrying assembly 1 to move from the first working position to the second working position, the carrying assembly 1 can move smoothly along the first guide rail 51 through the first sliding member 52, and is not easy to be deflected, so that the two first pressing and cutting tools 21 have a good cutting effect on the two edges of the housing of the battery 20 extending along the first direction.

The carrying assembly 1 may be provided on the first sliding member in a variety of ways. The carrying assembly 1 may be welded to the first sliding member 52, or the carrying assembly 1 may be screwed to the first sliding member 52, or the carrying assembly 1 and the first sliding member 52 may be integrally formed, which is not limited herein.

The first sliding member 52 may also be implemented in a variety of ways, and may be a sliding block, a sliding plate, or a sliding bracket, which is not limited herein and may be selected according to actual conditions.

For the first sliding member 52 being slidably provided on the first guide rail 51, it may mean that the first sliding member 52 is provided with a sliding groove, and at least a portion of the first guide rail 51 is embedded in the sliding groove. It may also mean that the first guide rail 51 is provided with a sliding groove, and the first sliding member 52 is at least partially embedded in the sliding groove. The present disclosure is not limited thereto.

In other embodiments, as shown in FIG. 1 and FIG. 5, the battery cutting apparatus 10 further comprises a first limiting assembly 6, which is provided adjacent to the second working position and is used to abut against the carrying assembly 1 along the first direction when the carrying assembly 1 slides to the second working position.

In this way, the carrying assembly 1 can be effectively prevented from continuing to move along the first direction, so that the carrying assembly 1 can drive the battery 20 to stop more accurately at the second working position, thereby enabling the second cutter assembly 4 to cut the two edges of the housing of the battery 20 extending along the second direction more accurately.

A sensor, such as a pressure sensor, a spacing sensor, etc., may be provided on the first limiting assembly 6. The sensor is electrically connected to the first driving assembly 3a, so that when the first limiting assembly 6 abuts against the carrying assembly 1 along the first direction, the sensor may transmit a signal to the first driving assembly 3a, and the first driving assembly 3a stops driving the carrying assembly 1 to move along the first direction, thereby enabling the carrying assembly 1 to stop more accurately at the second working position.

The above-mentioned first limiting assembly 6 may be implemented in various manners. In a possible implementation, the first limiting assembly 6 may comprise a limiting block, which is arranged adjacent to the second working position and is arranged opposite to the carrying assembly 1 along the first direction, so that when the carrying assembly 1 moves to the second working position, the limiting block can abut against the carrying assembly 1.

In another possible implementation, as shown in FIG. 5, the first limiting assembly 6 comprises a fixing member 61, a buffer member 63 and a first abutment member 62. The fixing member 61 is located at a side of the second working position away from the first working position, the first abutment member 62 is movably provided at a side of the fixing member 61 facing the second working position and is provided opposite to the carrying assembly 1 along the first direction, and the buffer member is located between the fixing member 61 and the first abutment member 62.

In this way, when the carrying assembly 1 moves to the second working position, it can abut against the first abutment member 62 to stop further movement, and the buffer member can effectively buffer the squeezing force between the carrying assembly 1 and the first abutment member 62, thereby reducing the probability of collision damage caused by abutment between the carrying assembly 1 and the first abutment member 62.

The fixing member 61 may comprise a fixing plate and a fixing arm provided at a side of the fixing plate facing the carrying assembly 1, the fixing arm may be provided with an accommodating cavity extending along the first direction, and the first abutment member 62 may be partially embedded in the accommodating cavity. One end of the buffer member may be connected to the bottom wall of the accommodating cavity, and the other end may be connected to the first abutment member 62. In this way, the accommodating cavity can perform certain guidance to the elastic deformation of the buffer member along the first direction.

The buffer member may be any one of a spring, foam, elastic piece, etc., which is not limited herein.

Optionally, as shown in FIG. 5, an elastic abutment portion 621 is provided at one end of the first abutment member 62 facing the second working position.

In this way, the elastic abutment portion 621 may be used to achieve flexible contact between the carrying assembly 1 and the first abutment member 62, thereby preventing collision damage caused by direct hard contact between the carrying assembly 1 and the first abutment member 62.

The flexible abutment portion may be any one of a rubber abutment portion, a foam abutment portion, a sponge abutment portion, etc., which is not limited herein.

In some embodiments, as shown in FIG. 4, the battery cutting apparatus 10 further comprises a second guide rail assembly 5b. The second guide rail assembly 5b comprises a second sliding member 54 and a second guide rail 53 extending along a second direction, the second guide rail 53 is provided on the base, the second sliding member 54 is slidably provided on the second guide rail 53, and the second cutter assembly 4 is provided on the second sliding member 54.

In this way, when the second driving assembly 3b drives the second cutter assembly 4 to move along the second direction, the second cutter assembly 4 can move more smoothly along the second guide rail 53 through the second sliding member 54, and is not easy to be shifted, so that the second cutter assembly 4 has a good cutting effect on the two edges of the housing of the battery 20 extending along the second direction.

The implementation manner of providing the second cutter assembly 4 on the second sliding member may be substantially the same as the implementation manner of providing the carrying assembly 1 on the first sliding member 52, and the details may be referred to foregoing, which will not be repeated herein.

The implementation manner of the second sliding member 54 may be substantially the same as that of the first sliding member 52, and will not be repeated herein.

The implementation manner of the second sliding member 54 being slidably provided on the second guide rail 53 may be substantially the same as the implementation manner of the first sliding member 52 being slidably provided on the first guide rail 51, which will not be repeated herein, either.

In other embodiments, as shown in FIG. 6, the battery cutting apparatus 10 further comprises a second limit assembly 7. The second limiting assembly 7 and the second cutter assembly 4 are located at opposite sides of the second working position. The second limiting assembly 7 comprises a limitation driving member and a second abutment member. The limitation driving member is in transmission connection with the second abutment member, and is used for driving the second abutment member to move in a direction approaching the carrying assembly 1 and abut against the carrying assembly 1 along the second direction when the carrying assembly 1 slides to the second working position.

In this way, by having the second abutment member abut against the carrying assembly 1 along the second direction, when the second driving assembly 3b drives the second cutter assembly 4 to cut the two edges of the housing of the battery 20 extending along the second direction, the carrying assembly 1 can be prevented from shaking or moving due to the force exerted by the second cutter assembly 4 along the second direction, thereby enabling the second cutter assembly 4 to have a good effect in cutting the two edges of the housing of the battery 20 extending along the second direction.

The limitation driving member may be any one of a pneumatic cylinder, an electric cylinder, a combination of a motor and a gear rack, etc., which is not limited herein.

The second abutment member may be an abutment block, an abutment plate, etc., which is not limited herein, either.

When the first cutter assembly 2 is cutting off the two edges of the housing of the battery 20 extending along the first direction, a cutting depth of the first cutter assembly 2 is t1, a wall thickness of the housing of the battery 20 is t2, and 0mm≤t1-t2≤0.1mm.

In this way, the first cutter assembly 2 can be made to cut off the two edges of the housing of the battery 20 extending along the first direction more fully, and it is not easy to cut the cell located in the housing, thereby effectively improving the cutting effect of the housing of the battery 20.

The difference between the cutting depth of the first cutter assembly 2 and the wall thickness of the housing of the battery 20 may be 0 mm, 0.02 mm, 0.05 mm, 0.08 mm, 0.1 mm, etc., which is not limited herein.

When the second cutter assembly 4 are cutting off the two edges of the housing of the battery 20 extending along the second direction, a cutting depth of the second cutter assembly 4 is t3, a wall thickness of the housing of the battery 20 is t4, and 0mm≤t3-t4≤0.1mm.

In this way, the second cutter assembly 4 can be made to cut off the two edges of the housing of the battery 20 extending along the second direction more fully, and it is not easy to cut the cell located in the housing, thereby effectively improving the cutting effect of the housing of the battery 20.

The difference between the cutting depth of the second cutter assembly 4 and the wall thickness of the housing of the battery 20 may be 0 mm, 0.02 mm, 0.05 mm, 0.08 mm, 0.1 mm, etc., which is not limited herein.

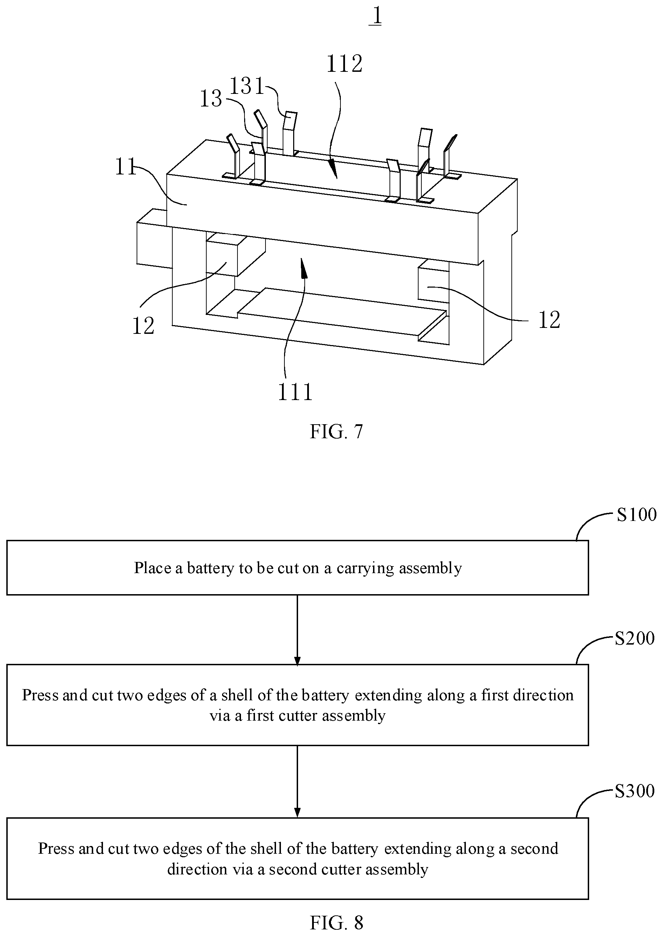

In some embodiments, as shown in FIG. 6 and FIG. 7, the carrying assembly 1 comprises a fixing seat 11, the fixed seat 11 has an accommodating groove 111, and the accommodating groove 111 is used to accommodate the battery 20. Two side walls of the accommodating groove 111 opposite to each other along the first direction are respectively provided with a clamping module 12 to clamp the battery 20 in the accommodating groove 111, and a side wall of the accommodating groove 111 facing the first cutter assembly 1 is provided with an avoidance opening 112.

In this way, the battery 20 accommodated in the accommodating groove 111 can be stably accommodated in the accommodating groove 111, so that when the first cutter assembly 2 and the second cutter assembly 2 cut the housing of the battery, the battery 20 is less likely to shake or even move, thereby effectively improving the cutting accuracy of the first cutter assembly 2 and the second cutter assembly 4.

Furthermore, the avoidance opening 112 is provided on the side wall of the accommodating groove 111 facing the first cutter assembly 2, which can effectively prevent the first cutter assembly 2 from interfering with and damaging the fixing seat 11 when cutting the two edges of the housing of the battery 20 extending along the first direction.

A groove may be provided on the bottom wall of the accommodating groove 111 for accommodating the top cover of the battery 20 to prevent the first cutter assembly 2 from cutting the top cover. At the same time, it can also provide certain limiting effect on the battery 20 to prevent the battery 20 from shifting when the first cutter assembly 2 cuts the housing of the battery 20.

The clamping module 12 may be implemented in various ways. For example, the clamping module 12 may comprise a clamping block, which may abut against two side surfaces of the battery 20 that are opposite to each other along the first direction. Alternatively, the clamping module 12 may comprise a clamping driving module and a clamping member, the clamping driving member is connected to the clamping member, and is used to drive the clamping member to move along the first direction, to clamp the battery 20 when the battery 20 is accommodated in the accommodating groove 111, and release the clamping of the battery 20 when the battery 20 needs to be removed. The clamping module 12 may also be implemented in other ways, which is not limited herein.

Optionally, as shown in FIG. 7, the fixing seat 11 is provided with an opening 112 communicated with the accommodating groove 111, and the opening 112 is used for placing or taking out the battery 20. A plurality of elastic guide sheets 13 are provided at intervals at a periphery of the opening 112, and an end of the elastic guide sheet 13 away from the opening 112 is bent outward to form a guide section 131.

In this way, the elastic guide sheets 13 have a guiding effect on placing the battery 20 into the accommodating groove 111, so that the battery 20 can be placed into the accommodating groove 111 more accurately.

Moreover, the elastic deformation of the elastic guide leaf may enable good guiding effect provided by the elastic guide sheets 13 when placing the battery 20 into the receiving groove 111. At the same time, when the battery 20 collides with the elastic guide leaf, the elastic guide leaf may be elastically deformed to reduce the probability of damaging the battery 20, which is conducive to improving the quality of disassembly of the battery 20.

In addition, by arranging a plurality of elastic guide sheets 13 at intervals at the periphery of the opening 112, the spacing between two adjacent elastic guide sheets 13 may be reasonably set to prevent the elastic guide sheets 13 from interfering with the manipulator when placing the battery 20 into the accommodating groove 111 by the manipulator, so that the battery 20 can be conveniently placed in the accommodating groove 111.

The elastic guide sheets 13 may be welded to the periphery of the opening 112, or may be fixed to the periphery of the opening 112 by bolts, or may be bonded to the periphery of the opening 112, which is not limited herein.

The material of the elastic guide sheet 13 may be any one of aluminum, aluminum alloy, copper, etc., which is not limited herein.

In some embodiments, as shown in FIG. 1, the battery cutting apparatus 10 comprises a loading working position (not shown in the figure) and an unloading working position (not shown in the figure), and the battery cutting apparatus 10 further comprises a transport assembly 8. The transport assembly 8 comprises a driving module 81 and a picking module 82. The driving module 81 is in transmission connection with the picking module 82 to drive the picking module 82 to move between the loading working position and the carrying assembly 1, to drive the picking module 82 to move between the carrying assembly 1 and the unloading working position, or to drive the picking module 82 to move between the loading working position and the carrying assembly 1 and to drive the picking module 82 to move between the carrying assembly 1 and the unloading working position.

In this way, the efficiency of placing the battery 20 from the loading working position onto the carrying assembly 1 and the efficiency of transporting the battery 20 with the housing cut from the carrying assembly 1 to the unloading working position are effectively improved, thereby effectively improving the efficiency of cutting the housing of the battery 20.

For the driving module 81 being used to drive the picking module 82 to move between the loading working position and the carrying assembly 1, to drive the picking module 82 to move between the carrying assembly 1 and the unloading working position, or to drive the picking module 82 to move between the loading working position and the carrying assembly 1 and to drive the picking module 82 to move between the carrying assembly 1 and the unloading working position, it may mean that the driving module 81 drives the picking module 82 to move between the loading working position and the carrying assembly 1. It may also mean that the driving module 81 drives the picking module 82 to move between the carrying assembly 1 and the unloading working position. It may also mean that the driving module 81 drives the picking module 82 to move between the loading working position and the carrying assembly 1, and drives the picking module 82 to move between the carrying assembly 1 and the unloading working position.

The above-mentioned picking module 82 may be implemented in various manners. In a possible implementation manner, the picking module 82 may comprise one picking member, and the driving module 81 is connected to the picking member to drive the picking member to move between the loading working position and the carrying assembly 1, to drive the picking member to move between the carrying assembly 1 and the unloading working position, or to drive the picking member to move between the loading working position and the carrying assembly 1 and to drive the picking member to move between the carrying assembly 1 and the unloading working position.

In another possible implementation manner, as shown in FIG. 1, the picking module 82 comprises a first picking member 821 and a second picking member 822, and the driving module 81 is connected to the first picking member 821 and the second picking member 822 to drive the first picking member 821 to move between the loading working position and the carrying assembly 1, and to drive the second picking member 822 to move between the carrying assembly 1 and the unloading working position.

In this way, the battery 20 to be cut and the battery 20 after cut can be transported respectively by the different first picking member 821 and second picking member 822, which further improves the efficiency of disassembling the housing of the battery 20.

The first picking member 821 may be a mechanical claw or an adsorption member provided with a vacuum adsorption hole, which is not limited herein. The second picking member 822 may have a substantially similar structure to the first picking member 821, so that the first picking member 821 and the second picking member 822 can be interchangeable, which facilitates the disassembly and assembly of the first picking member 821 and the second picking member 822.

In addition, the driving module 81 may comprise a first driving member, a second driving member and a bracket. The first driving member is provided on the bracket, and the first driving member is connected to the second driving member to drive the second driving member to move in the horizontal direction. The second driving member is movably provided on the bracket, and the second driving member is connected to the picking module 82 to drive the picking module 82 to move up and down. Therefore, the picking module 82 can be driven to move in the horizontal direction via the first driving member, and the picking module 82 can be driven to move in the vertical direction via the second driving member.

Furthermore, when the picking module 82 comprises the first picking member 821 and the second picking member 822, in some embodiments, the number of the first driving member and the number of the second driving member are both one, and the second driving member may be connected to the first picking member 821 and the second picking member 822, respectively, so that the first driving member may drive the first picking member 821 and the second picking member 822 to move in the horizontal direction at the same time, and the second driving member may drive the first picking member 821 and the second picking member 822 to move in the vertical direction at the same time. The second driving member may also drive the first picking member 821 and the second picking member 822 to move in the vertical direction, respectively. In other embodiments, the number of the first driving member and the number of the second driving member are both two, one first driving member and one second driving member are arranged in correspondence with the first picking member 821, and the other first driving member and the other second driving member are arranged in correspondence with the second picking member 822, so that the first picking member 821 and the second picking member 822 can move independently of each other, so that the transportation rhythm of the batteries 20 to be cut and the batteries 20 with the housings cut can be compact, which effectively improves the efficiency.

The first driving member may be any one of a pneumatic cylinder, an electric cylinder or a linear motor, etc., which is not limited herein. The implementation manner of the second driving member may be substantially the same as the implementation manner of the first driving member, which will not be repeated herein.

Optionally, the unloading working position comprises a recycling working position for the housing of the battery 20 and disassembly working position for the cell of the battery 20.

In this way, the second picking member 822 can transport the cut housing from the carrying assembly 1 to the recycling working position for the housing of the battery 20 to recycle the battery 20, and can also transport the cell and top cover of the remaining battery 20 after the housing is cut off from the carrying assembly 1 to the disassembly working position for the cell of the battery 20 to continue disassembling the cell and the top cover, thereby further improving the disassembly efficiency of the housing of the battery 20.

Exemplarily, the driving module 81 may drive the first picking assembly 821 to move the battery 20 to be cut from the loading working position to the carrying assembly 1. Then the first driving assembly 3a may drive the carrying assembly 1 to move from the first working position to the second working position, and in the process of moving, the two edges of the housing of the battery 20 extending along the first direction are cut off by the first cutter assembly 2. When the carrying assembly 1 is located at the second working position, the second driving assembly 3b may drive the second cutter assembly 4 to move along the second direction to cut off the two edges of the housing of the battery 20 extending along the second direction. Afterwards, the driving module 81 may drive the second picking member 822 to transport the cut housing of the battery 20 from the carrying assembly 1 to the recycling working position for the housing of the battery 20. Then, the driving module 81 drives the second picking member 822 again to transport the cell and the top cover of the battery 20 with the housing removed from the carrying assembly 1 to the disassembly working position for the cell of the battery 20. At this time, the driving module 81 may simultaneously drive the first picking module 82 to move to the loading working position to pick up the battery 20 to be cut, and transport the picked battery 20 to the carrying assembly 1. In this way, the transportation time of the picking assembly can be effectively saved, thereby effectively improving the disassembly efficiency of the housing of the battery 20.

In some embodiments, as shown in FIG. 1, the battery cutting apparatus 10 further comprises a conveying assembly 9, and the conveying assembly 9 is used to convey the battery 20 to be cut to the loading working position.

In this way, compared with manually transporting the battery 20 to be cut to the loading working position, the transportation efficiency of the battery 20 to be cut can be effectively improved, thereby improving the disassembly efficiency of the housing of the battery 20.

The conveying assembly 9 may be any one of a belt conveyor, a roller conveyor, a mesh belt conveyor, etc., which is not limited herein.

### Second embodiment

The present application further provides a battery cutting method, which is applied to the battery cutting apparatus10 described in any one of the above embodiments. As shown in FIG. 8, the battery cutting method comprises the following steps.

In step S100, a battery to be cut is placed on a carrying assembly.

In step S200, two edges of a housing of the battery extending along a first direction are pressed and cut via a first cutter assembly.

In step S300, two edges of the housing of the battery extending along a second direction are pressed and cut via a second cutter assembly.

Alternatively, the battery cutting method comprises the following steps.

In step S100, the battery to be cut is placed on the carrying assembly.

In step S200, the two edges of the housing of the battery extending along the first direction are pressed and cut via the first cutter assembly.

Alternatively, the battery cutting method comprises the following steps.

In step S100, the battery to be cut is placed on the carrying assembly.

In step S300, the two edges of the housing of the battery extending along the second direction are pressed and cut via the second cutter assembly.

In this way, when cutting the housing of the battery 20, the battery 20 to be cut may first be placed on the carrying assembly 1. Then, the first cutter assembly 2 and the carrying assembly 1 may move relative to each other in a first direction, and the two edges of the housing of the battery 20 extending in the first direction are pressed and cut by the first cutter assembly 2, so that the two edges of the housing of the battery 20 extending in the first direction are squeezed and deformed to cause fractures. Then, the second cutter assembly 4 and the carrying assembly 1 may move relative to each other in a second direction, and the two edges of the housing of the battery 20 extending in the second direction are pressed and cut by the second cutter assembly 4, so that the two edges of the housing of the battery 20 extending in the second direction are squeezed and deformed to cause fractures. The housing of the battery 20 is separated from the top cover so as to recycle the housing, and the cell can be taken out of the housing, and it is less likely to produce fine chips during the cutting process of the housing. On the first hand, it can effectively reduce the pollution to the surrounding environment, which is beneficial to environmental protection. On the second hand, it can greatly reduce the loss of the housing during the cutting process, so that the housing of the cell has a high recovery rate. On the third hand, it can also make it difficult for the cell located in the housing to adhere with fine chips due to the cutting of the housing, so that when the cell is disassembled later, there is no need to consider the cleaning of the fine chips on the surface of the cell, which effectively improves the disassembly efficiency of the cell of the battery 20.

It needs to be explained that the above-mentioned pressing and cutting refers to the extrusion and cutting performed by the first cutter assembly 2 on the two edges of the housing of the battery 20 extending in the first direction, which deforms and breaks the housing of the battery 20, and the generated fracture opening of the housing of the battery 20 extends along the first direction. Alternatively, it refers to the extrusion and cutting performed by the second cutter assembly 4 on the two edges of the housing of the battery 20 extending in the second direction, which deforms and breaks the housing of the battery 20, and the generated fracture opening of the housing of the battery 20 extends along the second direction.

When cutting the housing of the battery 20, after performing step S100, steps S200 and S300 may be executed successively, that is, the two edges extending along the first direction and the two edges extending along the second direction of the housing of the battery 20 are both pressed and cut. Alternatively, only step S200 is executed, that is, only the two edges of the housing of the battery 20 extending along the first direction are pressed and cut. Alternatively, only step S300 is executed, that is, only the two edges of the housing of the battery 20 extending along the second direction are pressed and cut. The present disclosure is not limited thereto, and the selection can be made according to the specific situation.

In addition, the above-mentioned step S100 may comprise the following step: transporting the battery 20 to be cut from the loading working position and placing it on the carrying assembly 1 via a picking assembly.

In this way, the efficiency of placing the battery 20 to be cut on the carrying assembly 1 can be effectively improved.

After executing step S100 and before executing step S200, the following step may also be comprised:
fixing the battery placed on the carrying assembly.

In this way, the housing of the battery 20 can be effectively prevented from shaking or moving during the cutting process, thereby improving the accuracy of the cutting of the housing of the battery 20 performed by the first cutter assembly 2 and the second cutter assembly 4.

Exemplarily, the battery cutting apparatus 10 may comprise a clamping driving member and a clamping member. After the battery 20 to be cut is placed on the carrying assembly 1, the clamping driving member may drive the clamping member to move in the direction approaching the battery 20 to clamp and fix the battery 20 on the carrying assembly 1.

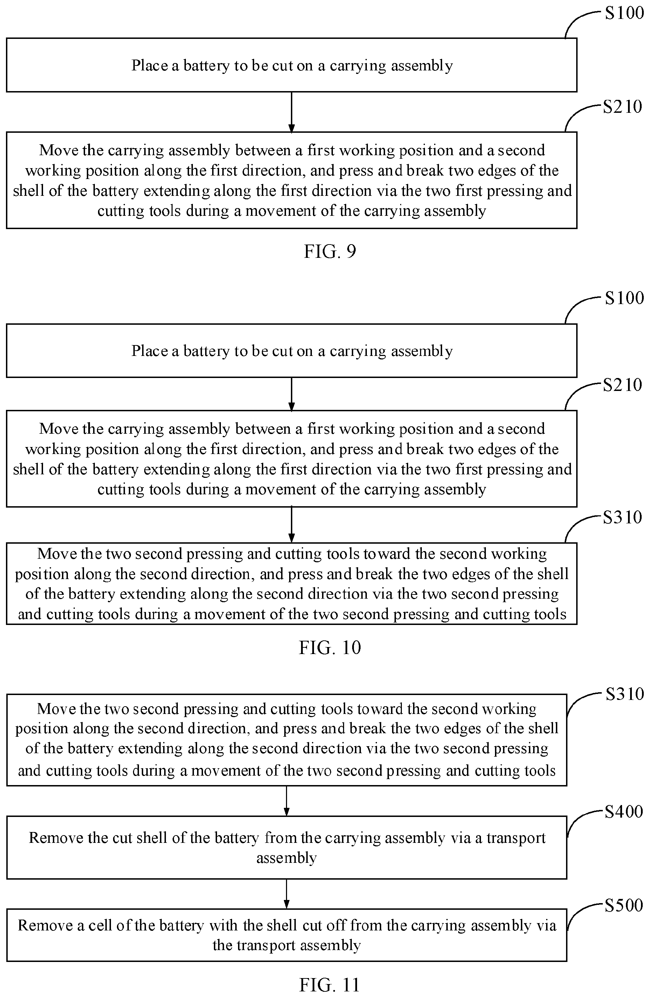

Optionally, the first cutter assembly 2 comprises two first pressing and cutting tools 21 provided opposite to each other along the second direction. As shown in FIG. 9, pressing and cutting two edges of the housing of the battery 20 extending along the first direction via the first cutter assembly 2 may comprise the following step.

In step S210, the carrying assembly is moved between a first working position and a second working position along the first direction, and the two edges of the housing of the battery extending along the first direction are pressed and broken via the two first pressing and cutting tools during a movement of the carrying assembly.

In this way, after the battery 20 to be cut is placed on the carrying assembly 1, the carrying assembly 1 may be moved from the first working position to the second working position along the first direction, and the two first pressing and cutting tools 21 may press and cut off the two edges of the housing of the battery extending along the first direction during the process of the carrying assembly 1 moving from the first working position to the second working position, so that it is less likely to produce fine chips when cutting the two edges of the housing of the battery extending along the first direction. Moreover, compared with moving the two pressing and cutting tools for cutting after moving the carrying assembly 1 to a certain position, the cutting efficiency can be effectively improved.

In addition, the second cutter assembly 4 comprises two second pressing and cutting tools 41 provided opposite to each other along the first direction, and the two second pressing and cutting tools 41 correspond to the second working position along the second direction. As shown in FIG. 10, pressing and cutting the two edges of the housing of the battery 20 extending along the second direction via the second cutter assembly 4 may comprise the following step.

In step S310, the two second pressing and cutting tools are moved toward the second working position along the second direction, and the two edges of the housing of the battery extending along the second direction are pressed and broken via the two second pressing and cutting tools during a movement of the two second pressing and cutting tools.

In this way, after the carrying assembly 1 carries the battery 20 to the second working position, two second pressing and cutting tools 41 may be moved toward the second working position along the second direction to press and cut off the two edges of the housing of the battery 20 extending along the second direction to separate the housing of the battery 20 from the top cover of the battery 20, and it is less likely to produce fine chips when cutting the two edges of the housing of the battery 20 extending along the second direction, thereby further reducing the loss of the housing of the battery 20.

Optionally, as shown in FIG. 11, after the two edges of the housing of the battery 20 extending along the second direction are pressed and broken during the movement of the two second pressing and cutting tools 41, the battery cutting method further comprises the following steps.

In step S400, the cut housing of the battery is removed from the carrying assembly via a transport assembly.

In step S500, a cell of the battery with the housing cut off are removed from the carrying assembly via the transport assembly.

In this way, after the housing of the battery 20 and the top cover of the battery 20 are pressed, cut and separated, the efficiency of transporting the cut housing of the battery 20 from the carrying assembly 1 to the recycling working position for the housing of the battery 20 can be effectively improved, and the efficiency of moving the cell of the battery 20 with the housing removed from the carrying assembly 1 to the disassembly working position for the cell of the battery 20 can be effectively improved, thereby effectively improving the disassembly efficiency of the housing of the battery 20.

### Third embodiment

The present application further provides a battery disassembly device, which comprises any one of the battery cutting apparatuses 10 described in the first embodiment.

In this embodiment, the battery cutting apparatus 10 in the battery disassembly device is the battery cutting apparatus 10 described in the above first embodiment. Therefore, the battery cutting apparatus 10 in this embodiment has the technical effects of the battery cutting apparatus 10 in the above first embodiment. Since the technical effects of the battery cutting apparatus 10 have been fully described in the first embodiment, they will not be repeated herein.

Finally, it may be noted that the above embodiments are only used to illustrate the technical solutions of the present disclosure and are not intended to limit them. Although the present disclosure has been described in detail with reference to the aforementioned embodiments, those skilled in the art may understand that they can still modify the technical solutions described in the aforementioned embodiments, or replace some or all of the technical features therein with equivalents. However, the invention and therefore the scope of protection are only defined by the claims.

## Claims

1. A battery cutting apparatus (10), configured for battery disassembly and recycling, comprising:
a carrying assembly (1), wherein the carrying assembly (1) is configured to carry a battery (20) to be cut;
a first cutter assembly (2);
a first driving assembly (3a), wherein the first driving assembly (3a) is in transmission connection with at least one of the first cutter assembly (2) and the carrying assembly (1), and is configured to make the first cutter assembly (2) and the carrying assembly (1) move relative to each other along a first direction, to cut off two edges of a housing of the battery (20) extending along the first direction;
a second cutter assembly (4); and
a second driving assembly (3b), wherein the second driving assembly (3b) is in transmission connection with at least one of the second cutter assembly (4) and the carrying assembly (1), and is configured to make the second cutter assembly (4) and the carrying assembly (1) move relative to each other along a second direction, to cut off two edges of the housing of the battery (20) extending along the second direction, wherein the second direction is perpendicular to the first direction; and
wherein at least one of the first cutter assembly (2) and the second cutter assembly (4) is a pressing and cutting cutter assembly, and the pressing and cutting cutter assembly is configured to be able to press and break the housing of the battery (20).

2. The battery cutting apparatus (10) according to claim 1, wherein the first driving assembly (3a) is in transmission connection with the carrying assembly (1) to drive the carrying assembly (1) to move between a first working position and a second working position along the first direction, the first cutter assembly (2) is located on a moving path where the carrying assembly (1) moves from the first working position to the second working position, to cut off the two edges of the housing of the battery (20) extending along the first direction during a movement of the carrying assembly (1), the second cutter assembly (4) is provided in correspondence with the second working position along the second direction, and the second driving assembly (3b) is in transmission connection with the second cutter assembly (4) to drive the second cutter assembly (4) to move along the second direction, to cut off the two edges of the housing of the battery (20) extending along the second direction.

3. The battery cutting apparatus (10) according to claim 2, wherein the first cutter assembly (2) comprises two first pressing and cutting tools (21), the two first pressing and cutting tools (21) are provided opposite to each other along the second direction and on two opposite sides of the moving path of the carrying assembly (1) respectively, a first preset spacing is defined between the two first pressing and cutting tools (21) along the second direction, and the first preset spacing is configured such that when the carrying assembly (1) moves along the first direction, the two first pressing and cutting tools (21) are able to press and break the two edges of the housing of the battery (20) extending along the first direction; and
wherein the first pressing and cutting tool (21) comprises a first tool holder (211) and a first tool body (212), the first tool body (212) is provided on the first tool holder (211) and is rotatable via a first rotating shaft, and an extending direction of the first rotating shaft is perpendicular to both the first direction and the second direction.

4. The battery cutting apparatus (10) according to claim 2, wherein the second cutter assembly (4) comprises two second pressing and cutting tools (41) provided opposite to each other along the first direction, the two second pressing and cutting tools (41) are provided in correspondence with the second working position along the second direction, a second preset spacing is defined between the two second pressing and cutting tools (41) along the first direction, and the second preset spacing is configured such that when the two second pressing and cutting tools (41) move along the second direction, the two second pressing and cutting tools (41) are able to press and break the two edges of the housing of the battery (20) extending along the second direction; and
wherein the second pressing and cutting tool (41) comprises a second tool holder (411) and a second tool body (412), the second tool body (412) is provided on the second tool holder (411) and is rotatable via a second rotating shaft, and an extending direction of the second rotating shaft is perpendicular to both the first direction and the second direction.

5. The battery cutting apparatus (10) according to claim 2, wherein the battery cutting apparatus (10) further comprises:
a first guide rail assembly (5a), wherein the first guide rail assembly (5a) comprises a first guide rail (51) and a first sliding member (52), the first guide rail (51) extends from the first working position to the second working position along the first direction, the first sliding member (52) is slidably provided on the first guide rail (51), and the carrying assembly (1) is provided on the first sliding member (52); and
a first limiting assembly (6), wherein the first limiting assembly (6) is provided adjacent to the second working position and is configured to abut against the carrying assembly (1) along the first direction when the carrying assembly (1) slides to the second working position;
wherein the first limiting assembly (6) comprises a fixing member (61), a buffer member (63) and a first abutment member (62), the fixing member (61) is located at a side of the second working position away from the first working position, the first abutment member (62) is movably provided at a side of the fixing member (61) facing the second working position and is provided opposite to the carrying assembly (1) along the first direction, and the buffer member (63) is located between the fixing member (61) and the first abutment member (62); and
wherein an elastic abutment portion (621) is provided at an end of the first abutment member (62) facing the second working position.

6. The battery cutting apparatus (10) according to claim 2, wherein the battery cutting apparatus (10) further comprises:
a second guide rail assembly (5b), wherein the second guide rail assembly (5b) comprises a second sliding member (54) and a second guide rail (53) extending along the second direction, the second sliding member (54) is slidably provided on the second guide rail (53), and the second cutter assembly (4) is provided on the second sliding member (54); and
a second limiting assembly (7), wherein the second limiting assembly (7) and the second cutter assembly (4) are located at opposite sides of the second working position, the second limiting assembly (7) comprises a limitation driving member and a second abutment member, the limitation driving member is in transmission connection with the second abutment member, and is configured to drive the second abutment member to move in a direction approaching the carrying assembly (1) and abut against the carrying assembly (1) along the second direction when the carrying assembly (1) slides to the second working position.

7. The battery cutting apparatus (10) according to any one of claims 1 to 6, wherein a cutting depth of the first cutter assembly (2) is t1, a wall thickness of the housing of the battery (20) is t2, and 0mm≤t1-t2≤0.1mm.

8. The battery cutting apparatus (10) according to any one of claims 1 to 6, wherein the carrying assembly (1) comprises a fixing seat (11), the fixing seat (11) has an accommodating groove (111), the accommodating groove (111) is configured to accommodate the battery (20), two side walls of the accommodating groove (111) opposite to each other along the first direction are respectively provided with a clamping module (12) to clamp the battery (20) in the accommodating groove (111), and a side wall of the accommodating groove (111) facing the first cutter assembly (2) is provided with an avoidance opening (112); and
wherein the fixing seat (11) is provided with an opening (112) communicated with the accommodating groove (111), the opening (112) is configured for placing or taking out the battery (20), a plurality of elastic guide sheets (13) are provided at an interval at a periphery of the opening (112), and an end of the elastic guide sheet (13) away from the opening (112) is bent outward to form a guide section (131).

9. The battery cutting apparatus (10) according to any one of claims 1 to 6, wherein the battery cutting apparatus (10) comprises a loading working position and an unloading working position, and the battery cutting apparatus (10) further comprises:
a transport assembly (8), wherein the transport assembly (8) comprises a driving module (81) and a picking module (82), the driving module (81) is in transmission connection with the picking module (82) for performing at least one of driving the picking module (82) to move between the loading working position and the carrying assembly (1) and driving the picking module (82) to move between the carrying assembly (1) and the unloading working position; and
a conveying assembly (9), wherein the conveying assembly (9) is configured to convey the battery (20) to be cut to the loading working position;
wherein the picking module (82) comprises a first picking member (821) and a second picking member (821), and the driving module (81) is in transmission connection with the first picking member (822) and the second picking member (822) respectively to drive the first picking member (821) to move between the loading working position and the carrying assembly (1) and to drive the second picking member (822) to move between the carrying assembly (1) and the unloading working position; and
wherein the unloading working position comprises a battery housing recycling working position and a battery cell disassembly working position.

10. A battery cutting method, applied to a battery cutting apparatus (10) according to any one of claims 1 to 9, wherein the battery cutting method comprises:
(S100) placing a battery (20) to be cut on a carrying assembly (1);
wherein the battery cutting method further comprises at least one of:
(S200) pressing and cutting two edges of a housing of the battery (20) extending along a first direction via a first cutter assembly (2); and
(S300) pressing and cutting the two edges of the housing of the battery (20) extending along a second direction via a second cutter assembly (4).

11. The battery cutting method according to claim 10, wherein the first cutter assembly (2) comprises two first pressing and cutting tools (21) provided opposite to each other along the second direction, and pressing and cutting the two edges of the housing of the battery (20) extending along the first direction via the first cutter assembly (2) comprises:
(S210) moving the carrying assembly (1) between a first working position and a second working position along the first direction, and pressing and breaking the two edges of the housing of the battery (20) extending along the first direction via the two first pressing and cutting tools (21) during a movement of the carrying assembly (1).

12. The battery cutting method according to claim 11, wherein the second cutter assembly (4) comprises two second pressing and cutting tools (41) provided opposite to each other along the first direction, the two second pressing and cutting tools (41) correspond to the second working position along the second direction, and pressing and cutting the two edges of the housing of the battery (20) extending along the second direction via the second cutter assembly (4) comprises:
(S310) moving the two second pressing and cutting tools (41) toward the second working position along the second direction, and pressing and breaking the two edges of the housing of the battery extending along the second direction via the two second pressing and cutting tools (41) during a movement of the two second pressing and cutting tools (41).

13. The battery cutting method according to claim 12, wherein after pressing and breaking the two edges of the housing of the battery (20) extending along the second direction via the two second pressing and cutting tools (41) during the movement of the two second pressing and cutting tools (41), the battery cutting method further comprises:
(S400) removing a cut housing of the battery (20) from the carrying assembly (1) via a transport assembly (8); and
(S500) removing a cell of the battery (20) with the housing cut off from the carrying assembly (1) via the transport assembly (8).

14. A battery disassembly device, comprising a battery cutting apparatus (10) according to any one of claims 1 to 9.

## Patentansprüche

1. Batterieschneidgerät (10), das zum Zerlegen und Recyceln von Batterien konfiguriert ist, umfassend:
eine Trageanordnung (1), wobei die Trageanordnung (1) so konfiguriert ist, dass sie eine zu schneidende Batterie (20) trägt;
eine erste Schneidanordnung (2);
eine erste Antriebsanordnung (3a), wobei die erste Antriebsanordnung (3a) in Übertragungsverbindung mit mindestens einer der ersten Schneidanordnung (2) und der Trageanordnung (1) steht und so konfiguriert ist, dass sie die erste Schneidanordnung (2) und die Trageanordnung (1) dazu bringt, sich relativ zueinander entlang einer ersten Richtung zu bewegen, um zwei Kanten eines Gehäuses der Batterie (20), die sich entlang der ersten Richtung erstrecken, abzuschneiden;
eine zweite Schneidanordnung (4); und
eine zweite Antriebsanordnung (3b), wobei die zweite Antriebsanordnung (3b) in Übertragungsverbindung mit mindestens einer der zweiten Schneidanordnung (4) und der Trageanordnung (1) steht und so konfiguriert ist, dass sie die zweite Schneidanordnung (4) und die Trageanordnung (1) dazu bringt, sich relativ zueinander entlang einer zweiten Richtung zu bewegen, um zwei Kanten des Gehäuses der Batterie (20), die sich entlang der zweiten Richtung erstrecken, abzuschneiden, wobei die zweite Richtung senkrecht zur ersten Richtung verläuft; und
wobei mindestens eine der ersten Schneidanordnung (2) und der zweiten Schneidanordnung (4) eine Press- und Schneidanordnung ist und die Press- und Schneidanordnung so konfiguriert ist, dass sie das Gehäuse der Batterie (20) pressen und brechen kann.

2. Batterieschneidgerät (10) gemäß Anspruch 1, wobei die erste Antriebsanordnung (3a) in Übertragungsverbindung mit der Trageanordnung (1) steht, um die Trageanordnung (1) anzutreiben, sich entlang der ersten Richtung zwischen einer ersten Arbeitsposition und einer zweiten Arbeitsposition zu bewegen, sich die erste Schneidanordnung (2) auf einer Bewegungsbahn befindet, auf der sich die Trageanordnung (1) von der ersten Arbeitsposition zur zweiten Arbeitsposition bewegt, um während einer Bewegung der Trageanordnung (1) die zwei Kanten des Gehäuses der Batterie (20) abzuschneiden, die sich entlang der ersten Richtung erstrecken, die zweite Schneidanordnung (4) entsprechend der zweiten Arbeitsposition entlang der zweiten Richtung vorgesehen ist, und die zweite Antriebsanordnung (3b) in Übertragungsverbindung mit der zweiten Schneidanordnung (4) steht, um die zweite Schneidanordnung (4) anzutreiben, sich entlang der zweiten Richtung zu bewegen, um die zwei Kanten des Gehäuses der Batterie (20) abzuschneiden, die sich entlang der zweiten Richtung erstrecken.

3. Batterieschneidgerät (10) gemäß Anspruch 2, wobei die erste Schneidanordnung (2) zwei erste Press- und Schneidwerkzeuge (21) umfasst, die zwei ersten Press- und Schneidwerkzeuge (21) einander entlang der zweiten Richtung gegenüberliegend und jeweils an zwei gegenüberliegenden Seiten der Bewegungsbahn der Trageanordnung (1) vorgesehen sind, zwischen den zwei ersten Press- und Schneidwerkzeugen (21) entlang der zweiten Richtung ein erster voreingestellter Abstand definiert ist, und der erste voreingestellte Abstand so konfiguriert ist, dass, wenn sich die Trageanordnung (1) entlang der ersten Richtung bewegt, die zwei ersten Press- und Schneidwerkzeuge (21) in der Lage sind, die zwei Kanten des Gehäuses der Batterie (20) zu pressen und zu brechen, die sich entlang der ersten Richtung erstrecken; und
wobei das erste Press- und Schneidwerkzeug (21) einen ersten Werkzeughalter (211) und einen ersten Werkzeugkörper (212) umfasst, der erste Werkzeugkörper (212) an dem ersten Werkzeughalter (211) vorgesehen ist und über eine erste Drehwelle drehbar ist, und eine Ausdehnungsrichtung der ersten Drehwelle sowohl zur ersten Richtung als auch zur zweiten Richtung senkrecht ist.

4. Batterieschneidgerät (10) gemäß Anspruch 2, wobei die zweite Schneidanordnung (4) zwei zweite Press- und Schneidwerkzeuge (41) umfasst, die entlang der ersten Richtung einander gegenüberliegend vorgesehen sind, wobei die zwei zweiten Press- und Schneidwerkzeuge (41) entsprechend der zweiten Arbeitsposition entlang der zweiten Richtung vorgesehen sind, ein zweiter voreingestellter Abstand zwischen den zwei zweiten Press- und Schneidwerkzeugen (41) entlang der ersten Richtung definiert ist, und der zweite voreingestellte Abstand so konfiguriert ist, dass, wenn sich die zwei zweiten Press- und Schneidwerkzeuge (41) entlang der zweiten Richtung bewegen, die zwei zweiten Press- und Schneidwerkzeuge (41) in der Lage sind, die zwei Kanten des Gehäuses der Batterie (20) zu pressen und zu brechen, die sich entlang der zweiten Richtung erstrecken; und
wobei das zweite Press- und Schneidwerkzeug (41) einen zweiten Werkzeughalter (411) und einen zweiten Werkzeugkörper (412) umfasst, der zweite Werkzeugkörper (412) an dem zweiten Werkzeughalter (411) vorgesehen und über eine zweite Drehwelle drehbar ist, und eine Ausdehnungsrichtung der zweiten Drehwelle sowohl zur ersten Richtung als auch zur zweiten Richtung senkrecht ist.

5. Batterieschneidgerät (10) gemäß Anspruch 2, wobei das Batterieschneidgerät (10) ferner Folgendes umfasst:
eine erste Führungsschienenanordnung (5a), wobei die erste Führungsschienenanordnung (5a) eine erste Führungsschiene (51) und ein erstes Gleitelement (52) umfasst, sich die erste Führungsschiene (51) entlang der ersten Richtung von der ersten Arbeitsposition zur zweiten Arbeitsposition erstreckt, das erste Gleitelement (52) gleitbar an der ersten Führungsschiene (51) vorgesehen ist, und die Trageanordnung (1) an dem ersten Gleitelement (52) vorgesehen ist; und
eine erste Begrenzungsanordnung (6), wobei die erste Begrenzungsanordnung (6) benachbart zur zweiten Arbeitsposition vorgesehen ist und so konfiguriert ist, dass sie entlang der ersten Richtung an der Trageanordnung (1) anliegt, wenn die Trageanordnung (1) in die zweite Arbeitsposition gleitet;
wobei die erste Begrenzungsanordnung (6) ein Befestigungselement (61), ein Pufferelement (63) und ein erstes Anschlagelement (62) umfasst, sich das Befestigungselement (61) an einer Seite der zweiten Arbeitsposition befindet, die von der ersten Arbeitsposition abgewandt ist, das erste Anschlagelement (62) beweglich an einer Seite des Befestigungselements (61) vorgesehen ist, die der zweiten Arbeitsposition zugewandt ist und gegenüber der Traganordnung (1) entlang der ersten Richtung vorgesehen ist, und sich das Pufferelement (63) zwischen dem Befestigungselement (61) und dem ersten Anschlagelement (62) befindet; und
wobei ein elastischer Anschlagbereich (621) an einem Ende des ersten Anschlagelements (62) vorgesehen ist, das der zweiten Arbeitsposition zugewandt ist.

6. Batterieschneidgerät (10) gemäß Anspruch 2, wobei das Batterieschneidgerät (10) ferner Folgendes umfasst:
eine zweite Führungsschienenanordnung (5b), wobei die zweite Führungsschienenanordnung (5b) ein zweites Gleitelement (54) und eine zweite Führungsschiene (53) umfasst, die sich entlang der zweiten Richtung erstreckt, das zweite Gleitelement (54) gleitbar auf der zweiten Führungsschiene (53) vorgesehen ist und die zweite Schneidanordnung (4) auf dem zweiten Gleitelement (54) vorgesehen ist; und
eine zweite Begrenzungsanordnung (7), wobei sich die zweite Begrenzungsanordnung (7) und die zweite Schneidanordnung (4) an gegenüberliegenden Seiten der zweiten Arbeitsposition befinden, die zweite Begrenzungsanordnung (7) ein Begrenzungsantriebselement und ein zweites Anschlagelement umfasst, das Begrenzungsantriebselement in Übertragungsverbindung mit dem zweiten Anschlagelement steht und so konfiguriert ist, dass es das zweite Anschlagelement antreibt, sich in einer Richtung zu bewegen, die sich der Trageanordnung (1) nähert, und entlang der zweiten Richtung an der Trageanordnung (1) anzuliegen, wenn die Trageanordnung (1) in die zweite Arbeitsposition gleitet.

7. Batterieschneidgerät (10) gemäß einem der Ansprüche 1 bis 6, wobei eine Schnitttiefe der ersten Schneidanordnung (2) t1 beträgt, eine Wandstärke des Gehäuses der Batterie (20) t2 beträgt und 0 mm≤t1 - t2≤ 0,1 mm gilt.

8. Batterieschneidgerät (10) gemäß einem der Ansprüche 1 bis 6, wobei die Trageanordnung (1) einen Befestigungssitz (11) umfasst, der Befestigungssitz (11) eine Aufnahmenut (111) aufweist, die Aufnahmenut (111) so konfiguriert ist, dass sie die Batterie (20) aufnimmt, zwei Seitenwände der Aufnahmenut (111), die einander entlang der ersten Richtung gegenüberliegen, jeweils mit einem Klemmmodul (12) versehen sind, um die Batterie (20) in der Aufnahmenut (111) festzuklemmen, und eine Seitenwand der Aufnahmenut (111), die der ersten Schneideinrichtung (2) zugewandt ist, mit einer Ausweichöffnung (112) versehen ist; und
wobei der Befestigungssitz (11) mit einer Öffnung (112) versehen ist, die mit der Aufnahmenut (111) in Verbindung steht, die Öffnung (112) zum Einlegen oder Entnehmen der Batterie (20) konfiguriert ist, eine Vielzahl von elastischen Führungsblechen (13) in einem Abstand an einem Umfang der Öffnung (112) vorgesehen ist, und ein Ende des elastischen Führungsblechs (13), das von der Öffnung (112) abgewandt ist, nach außen gebogen ist, um einen Führungsabschnitt (131) auszubilden.

9. Batterieschneidgerät (10) gemäß einem der Ansprüche 1 bis 6, wobei das Batterieschneidgerät (10) eine Lade-Arbeitsposition und eine Entlade-Arbeitsposition umfasst, und das Batterieschneidgerät (10) ferner Folgendes umfasst:
eine Transportanordnung (8), wobei die Transportanordnung (8) ein Antriebsmodul (81) und ein Entnahmemodul (82) umfasst, das Antriebsmodul (81) in einer Übertragungsverbindung mit dem Entnahmemodul (82) steht, um mindestens eines der Folgenden zu bewirken: Antreiben des Entnahmemoduls (82), so dass es sich zwischen der Lade-Arbeitsposition und der Trageanordnung (1) bewegt, und Antreiben des Entnahmemoduls (82), so dass es sich zwischen der Trageanordnung (1) und der Entlade-Arbeitsposition bewegt; und
eine Förderanordnung (9), wobei die Förderanordnung (9) so konfiguriert ist, dass sie die zu schneidende Batterie (20) zur Lade-Arbeitsposition befördert;
wobei das Entnahmemodul (82) ein erstes Entnahmeelement (821) und ein zweites Entnahmeelement (821) umfasst, und das Antriebsmodul (81) jeweils in Übertragungsverbindung mit dem ersten Entnahmeelement (821) und dem zweiten Entnahmeelement (822) steht, um das erste Entnahmeelement (821) anzutreiben, so dass es sich zwischen der Lade-Arbeitsposition und der Tragevorrichtung (1) bewegt, und um das zweite Entnahmeelement (822) anzutreiben, so dass es sich zwischen der Tragevorrichtung (1) und der Entlade-Arbeitsposition bewegt; und
wobei die Entlade-Arbeitsposition eine Arbeitsposition zum Recycling von Batteriegehäusen und eine Arbeitsposition zum Zerlegen von Batteriezellen umfasst.

10. Batterieschneidverfahren, angewandt auf ein Batterieschneidgerät (10) gemäß einem der Ansprüche 1 bis 9, wobei das Verfahren zum Schneiden einer Batterie Folgendes umfasst:
(S100) Anordnen einer zu schneidenden Batterie (20) auf einer Trageanordnung (1);
wobei das Batterieschneidverfahren ferner mindestens einen der folgenden Schritte umfasst:
(S200) Pressen und Schneiden von zwei Kanten eines Gehäuses der Batterie (20), die sich entlang einer ersten Richtung erstrecken, mittels einer ersten Schneidanordnung (2); und
(S300) Pressen und Schneiden der zwei Kanten des Gehäuses der Batterie (20), die sich entlang einer zweiten Richtung erstrecken, mittels einer zweiten Schneidanordnung (4).

11. Batterieschneidverfahren gemäß Anspruch 10, wobei die erste Schneidanordnung (2) zwei erste Press- und Schneidwerkzeuge (21) umfasst, die entlang der zweiten Richtung einander gegenüberliegend angeordnet sind, und das Pressen und Schneiden der zwei Kanten des Gehäuses der Batterie (20), die sich entlang der ersten Richtung erstrecken, mittels der ersten Schneidanordnung (2) Folgendes umfasst:
(S210) Bewegen der Trageanordnung (1) zwischen einer ersten Arbeitsposition und einer zweiten Arbeitsposition entlang der ersten Richtung, und Pressen und Brechen der zwei Kanten des Batteriegehäuses (20), die sich entlang der ersten Richtung erstrecken, mittels der zwei ersten Press- und Schneidwerkzeuge (21) während einer Bewegung der Trageanordnung (1).

12. Batterieschneidverfahren gemäß Anspruch 11, wobei die zweite Schneidanordnung (4) zwei zweite Press- und Schneidwerkzeuge (41) umfasst, die entlang der ersten Richtung einander gegenüberliegend vorgesehen sind, wobei die zwei zweiten Press- und Schneidwerkzeuge (41) der zweiten Arbeitsposition entlang der zweiten Richtung entsprechen, und das Pressen und Schneiden der zwei Kanten des Gehäuses der Batterie (20), die sich entlang der zweiten Richtung erstrecken, mittels der zweiten Schneidanordnung (4) Folgendes umfasst:
(S310) Bewegen der zwei zweiten Press- und Schneidwerkzeuge (41) in Richtung der zweiten Arbeitsposition entlang der zweiten Richtung, und Pressen und Brechen der zwei Kanten des Gehäuses der Batterie, das sich entlang der zweiten Richtung erstreckt, mittels der zwei zweiten Press- und Schneidwerkzeuge (41) während einer Bewegung der zwei zweiten Press- und Schneidwerkzeuge (41).

13. Batterieschneideverfahren gemäß Anspruch 12, wobei das Batterieschneideverfahren nach dem Pressen und Brechen der zwei Kanten des Gehäuses der Batterie (20), das sich in der zweiten Richtung erstreckt, mittels der zwei zweiten Press- und Schneidwerkzeuge (41) während der Bewegung der zwei zweiten Press- und Schneidwerkzeuge (41) ferner Folgendes umfasst:
(S400) Entfernen eines geschnittenen Gehäuses der Batterie (20) von der Trageanordnung (1) über eine Transportanordnung (8); und
(S500) Entfernen einer Zelle der Batterie (20) mit dem abgeschnittenen Gehäuse von der Trageanordnung (1) über die Transportanordnung (8).

14. Batteriezerlegungsvorrichtung, umfassend ein Batterieschneidgerät (10) gemäß einem der Ansprüche 1 bis 9.

## Revendications

1. Appareil de découpe de batterie (10), configuré pour le démontage et le recyclage de batteries, comprenant :
un ensemble de transport (1), l'ensemble de transport (1) étant configuré pour transporter une batterie (20) à découper ;
un premier ensemble de coupe (2) ;
un premier ensemble d'entraînement (3a), le premier ensemble d'entraînement (3a) étant en liaison de transmission avec au moins l'un parmi le premier ensemble de coupe (2) et l'ensemble de transport (1), et étant configuré pour faire se déplacer relativement l'un par rapport à l'autre le premier ensemble de coupe (2) et l'ensemble de transport (1) selon une première direction, afin de couper deux bords d'un boîtier de la batterie (20) s'étendant selon la première direction ;
un second ensemble de coupe (4) ; et
un second ensemble d'entraînement (3b), le second ensemble d'entraînement (3b) étant en liaison de transmission avec au moins l'un parmi le second ensemble de coupe (4) et l'ensemble de transport (1), et étant configuré pour faire se déplacer relativement l'un par rapport à l'autre le second ensemble de coupe (4) et l'ensemble de transport (1) selon une seconde direction, afin de couper deux bords du boîtier de la batterie (20) s'étendant selon la seconde direction, la seconde direction étant perpendiculaire à la première direction ; et
dans lequel au moins l'un parmi le premier ensemble de coupe (2) et le second ensemble de coupe (4) est un ensemble de coupe par pression et coupe, et l'ensemble de coupe par pression et coupe est configuré pour pouvoir presser et rompre le boîtier de la batterie (20).

2. Appareil de découpe de batterie (10) selon la revendication 1, dans lequel le premier ensemble d'entraînement (3a) est en liaison de transmission avec l'ensemble de transport (1) pour entraîner l'ensemble de transport (1) à se déplacer entre une première position de travail et une seconde position de travail selon la première direction, le premier ensemble de coupe (2) est situé sur un trajet de déplacement sur lequel l'ensemble de transport (1) se déplace depuis la première position de travail vers la seconde position de travail, afin de couper les deux bords du boîtier de la batterie (20) s'étendant selon la première direction pendant un déplacement de l'ensemble de transport (1), le second ensemble de coupe (4) est disposé en correspondance avec la seconde position de travail selon la seconde direction, et le second ensemble d'entraînement (3b) est en liaison de transmission avec le second ensemble de coupe (4) pour entraîner le second ensemble de coupe (4) à se déplacer selon la seconde direction, afin de couper les deux bords du boîtier de la batterie (20) s'étendant selon la seconde direction.

3. Appareil de découpe de batterie (10) selon la revendication 2, dans lequel le premier ensemble de coupe (2) comprend deux premiers outils de pression et de coupe (21), les deux premiers outils de pression et de coupe (21) étant disposés opposés l'un à l'autre selon la seconde direction et respectivement sur deux côtés opposés du trajet de déplacement de l'ensemble de transport (1), un premier espacement prédéfini étant défini entre les deux premiers outils de pression et de coupe (21) selon la seconde direction, et le premier espacement prédéfini étant configuré de telle sorte que, lorsque l'ensemble de transport (1) se déplace selon la première direction, les deux premiers outils de pression et de coupe (21) soient aptes à presser et rompre les deux bords du boîtier de la batterie (20) s'étendant selon la première direction ; et
dans lequel le premier outil de pression et de coupe (21) comprend un premier porte-outil (211) et un premier corps d'outil (212), le premier corps d'outil (212) est disposé sur le premier porte-outil (211) et est rotatif par l'intermédiaire d'un premier arbre de rotation, et une direction d'extension du premier arbre de rotation est perpendiculaire à la fois à la première direction et à la seconde direction.

4. Appareil de découpe de batterie (10) selon la revendication 2, dans lequel le second ensemble de coupe (4) comprend deux seconds outils de pression et de coupe (41) disposés opposés l'un à l'autre selon la première direction, les deux seconds outils de pression et de coupe (41) étant disposés en correspondance avec la seconde position de travail selon la seconde direction, un second espacement prédéfini étant défini entre les deux seconds outils de pression et de coupe (41) selon la première direction, et le second espacement prédéfini étant configuré de telle sorte que, lorsque les deux seconds outils de pression et de coupe (41) se déplacent selon la seconde direction, les deux seconds outils de pression et de coupe (41) soient aptes à presser et rompre les deux bords du boîtier de la batterie (20) s'étendant selon la seconde direction ; et
dans lequel le second outil de pression et de coupe (41) comprend un second porte-outil (411) et un second corps d'outil (412), le second corps d'outil (412) est disposé sur le second porte-outil (411) et est rotatif par l'intermédiaire d'un second arbre de rotation, et une direction d'extension du second arbre de rotation est perpendiculaire à la fois à la première direction et à la seconde direction.

5. Appareil de découpe de batterie (10) selon la revendication 2, dans lequel l'appareil de découpe de batterie (10) comprend en outre :
un premier ensemble de rail de guidage (Sa), le premier ensemble de rail de guidage (Sa) comprenant un premier rail de guidage (51) et un premier élément coulissant (52), le premier rail de guidage (51) s'étendant depuis la première position de travail jusqu'à la seconde position de travail selon la première direction, le premier élément coulissant (52) étant monté coulissant sur le premier rail de guidage (51), et l'ensemble de transport (1) étant disposé sur le premier élément coulissant (52) ; et
un premier ensemble de limitation (6), le premier ensemble de limitation (6) étant disposé adjacent à la seconde position de travail et étant configuré pour venir en butée contre l'ensemble de transport (1) selon la première direction lorsque l'ensemble de transport (1) coulisse jusqu'à la seconde position de travail ;
dans lequel le premier ensemble de limitation (6) comprend un élément de fixation (61), un élément tampon (63) et un premier élément de butée (62), l'élément de fixation (61) étant situé du côté de la seconde position de travail éloigné de la première position de travail, le premier élément de butée (62) étant disposé de manière mobile du côté de l'élément de fixation (61) faisant face à la seconde position de travail et étant disposé opposé à l'ensemble de transport (1) selon la première direction, et l'élément tampon (63) étant situé entre l'élément de fixation (61) et le premier élément de butée (62) ; et
dans lequel une partie de butée élastique (621) est disposée à une extrémité du premier élément de butée (62) faisant face à la seconde position de travail.

6. Appareil de découpe de batterie (10) selon la revendication 2, dans lequel l'appareil de découpe de batterie (10) comprend en outre :
un second ensemble de rail de guidage (Sb), le second ensemble de rail de guidage (Sb) comprenant un second élément coulissant (54) et un second rail de guidage (53) s'étendant selon la seconde direction, le second élément coulissant (54) étant monté coulissant sur le second rail de guidage (53), et le second ensemble de coupe (4) étant disposé sur le second élément coulissant (54) ; et
un second ensemble de limitation (7), le second ensemble de limitation (7) et le second ensemble de coupe (4) étant situés de part et d'autre opposés de la seconde position de travail, le second ensemble de limitation (7) comprenant un élément d'entraînement de limitation et un second élément de butée, l'élément d'entraînement de limitation étant en liaison de transmission avec le second élément de butée, et étant configuré pour entraîner le second élément de butée à se déplacer dans une direction s'approchant de l'ensemble de transport (1) et à venir en butée contre l'ensemble de transport (1) selon la seconde direction lorsque l'ensemble de transport (1) coulisse jusqu'à la seconde position de travail.

7. Appareil de découpe de batterie (10) selon l'une quelconque des revendications 1 à 6, dans lequel une profondeur de coupe du premier ensemble de coupe (2) est t1, une épaisseur de paroi du boîtier de la batterie (20) est t2, et 0 mm ≤ t1-t2 ≤ 0,1 mm.

8. Appareil de découpe de batterie (10) selon l'une quelconque des revendications 1 à 6, dans lequel l'ensemble de transport (1) comprend un siège de fixation (11), le siège de fixation (11) comporte une rainure de logement (111), la rainure de logement (111) étant configurée pour loger la batterie (20), deux parois latérales de la rainure de logement (111) opposées l'une à l'autre selon la première direction étant respectivement pourvues d'un module de serrage (12) pour serrer la batterie (20) dans la rainure de logement (111), et une paroi latérale de la rainure de logement (111) faisant face au premier ensemble de coupe (2) étant pourvue d'une ouverture d'évitement (112) ; et
dans lequel le siège de fixation (11) est pourvu d'une ouverture (112) communiquant avec la rainure de logement (111), l'ouverture (112) étant configurée pour la mise en place ou le retrait de la batterie (20), une pluralité de languettes de guidage élastiques (13) étant disposées à intervalle sur une périphérie de l'ouverture (112), et une extrémité de la languette de guidage élastique (13) éloignée de l'ouverture (112) étant courbée vers l'extérieur pour former une section de guidage (131).

9. Appareil de découpe de batterie (10) selon l'une quelconque des revendications 1 à 6, dans lequel l'appareil de découpe de batterie (10) comprend une position de travail de chargement et une position de travail de déchargement, et l'appareil de découpe de batterie (10) comprend en outre :
un ensemble de transfert (8), l'ensemble de transfert (8) comprenant un module d'entraînement (81) et un module de préhension (82), le module d'entraînement (81) étant en liaison de transmission avec le module de préhension (82) pour réaliser au moins l'une des opérations consistant à entraîner le module de préhension (82) à se déplacer entre la position de travail de chargement et l'ensemble de transport (1) et à entraîner le module de préhension (82) à se déplacer entre l'ensemble de transport (1) et la position de travail de déchargement ; et
un ensemble de convoyage (9), l'ensemble de convoyage (9) étant configuré pour convoyer la batterie (20) à découper jusqu'à la position de travail de chargement ;
dans lequel le module de préhension (82) comprend un premier organe de préhension (821) et un second organe de préhension (821), et le module d'entraînement (81) est en liaison de transmission respectivement avec le premier organe de préhension (822) et le second organe de préhension (822) afin d'entraîner le premier organe de préhension (821) à se déplacer entre la position de travail de chargement et l'ensemble de transport (1) et d'entraîner le second organe de préhension (822) à se déplacer entre l'ensemble de transport (1) et la position de travail de déchargement ; et
dans lequel la position de travail de déchargement comprend une position de travail de recyclage de boîtier de batterie et une position de travail de démontage de cellule de batterie.

10. Procédé de découpe de batterie, appliqué à un appareil de découpe de batterie (10) selon l'une quelconque des revendications 1 à 9, le procédé de découpe de batterie comprenant :
(5100) placer une batterie (20) à découper sur un ensemble de transport (1) ; le procédé de découpe de batterie comprenant en outre au moins l'une des opérations suivantes :
(5200) presser et couper deux bords d'un boîtier de la batterie (20) s'étendant selon une première direction au moyen d'un premier ensemble de coupe (2) ; et
(5300) presser et couper les deux bords du boîtier de la batterie (20) s'étendant selon une seconde direction au moyen d'un second ensemble de coupe (4).

11. Procédé de découpe de batterie selon la revendication 10, dans lequel le premier ensemble de coupe (2) comprend deux premiers outils de pression et de coupe (21) disposés opposés l'un à l'autre selon la seconde direction, et le fait de presser et couper les deux bords du boîtier de la batterie (20) s'étendant selon la première direction au moyen du premier ensemble de coupe (2) comprend :
(5210) déplacer l'ensemble de transport (1) entre une première position de travail et une seconde position de travail selon la première direction, et presser et rompre les deux bords du boîtier de la batterie (20) s'étendant selon la première direction au moyen des deux premiers outils de pression et de coupe (21) pendant un déplacement de l'ensemble de transport (1).

12. Procédé de découpe de batterie selon la revendication 11, dans lequel le second ensemble de coupe (4) comprend deux seconds outils de pression et de coupe (41) disposés opposés l'un à l'autre selon la première direction, les deux seconds outils de pression et de coupe (41) correspondant à la seconde position de travail selon la seconde direction, et le fait de presser et couper les deux bords du boîtier de la batterie (20) s'étendant selon la seconde direction au moyen du second ensemble de coupe (4) comprend :
(5310) déplacer les deux seconds outils de pression et de coupe (41) vers la seconde position de travail selon la seconde direction, et presser et rompre les deux bords du boîtier de la batterie s'étendant selon la seconde direction au moyen des deux seconds outils de pression et de coupe (41) pendant un déplacement des deux seconds outils de pression et de coupe (41).

13. Procédé de découpe de batterie selon la revendication 12, dans lequel, après avoir pressé et rompu les deux bords du boîtier de la batterie (20) s'étendant selon la seconde direction au moyen des deux seconds outils de pression et de coupe (41) pendant le déplacement des deux seconds outils de pression et de coupe (41), le procédé de découpe de batterie comprend en outre :
(5400) retirer un boîtier découpé de la batterie (20) de l'ensemble de transport (1) au moyen d'un ensemble de transfert (8) ; et
(5500) retirer de l'ensemble de transport (1), au moyen de l'ensemble de transfert (8), une cellule de la batterie (20) dont le boîtier a été coupé.

14. Dispositif de démontage de batterie, comprenant un appareil de découpe de batterie (10) selon l'une quelconque des revendications 1 à 9.
